# EUROPEAN PATENT APPLICATION

(11) **EP 4 497 972 A1**
(43) Date of publication of application: **29.01.2025**
(21) Application number: 23188499.0
(22) Date of filing: 28.07.2023
(51) Int. Cl.: F16H 19/06, F16G 1/24, F16G 1/28, F16G 13/20, F16H 19/04, F16G 11/00

(54) **BELT ACTUATOR SYSTEM**

(71) Applicant: ABB E-mobility B.V., 2629 JG Delft (NL)
(72) Inventor: PICARD, Luc, 1930 Zaventem (BE); PEETERS, Johan, 3360 Korbeel-Lo (BE)
(74) Representative: Maiwald GmbH

(57) **Abstract**

The present invention relates to a belt actuator system (100) comprising:
at least a drive unit (120),
a belt zipper system (1) configured to form a third belt element (30) in a zip-fastening manner of a first belt element (10) and a second belt element (20) comprising:
a guiding arrangement (40, 42, 44) configured to move the first belt element (10) and the second belt element (20) in a synchronous manner;
a first zip-fastening arrangement (50), wherein the first zip-fastening arrangement (50) is configured to connect a first part (12) of the first belt element (10) with a second part (14) of the second belt element (20) in a zip-like manner to obtain the third zip-fastened belt element (30), and
wherein the drive unit (120) is connected to the first zip-fastening arrangement (50) configured to drive the first zip-fastening arrangement (50).

## Description

### FIELD OF THE INVENTION

The present invention relates to a belt actuator system.

### BACKGROUND OF THE INVENTION

In prior art, usually chains are used to be driven by an actuator system such as a gear that drives the chain and also may further stack the link elements of the chain. Such a chain in combination with a corresponding actuator means may be used to lift or to push a load or drive a rotating element.

In a further application, a chain or to be more general, a movable connecting element may be used by a zipper system to change a position of a tool that is connected to the zipper system via said chain.

However, these chains known in prior art are usually made of metal which makes the chain difficult to handle due to its weight. Also the production of such a chain is difficult and expensive due to a complex production process of connecting the plurality of link elements of such a chain in an end-to-end manner. Further, the application of a chain is such a zipper system to lift items is often accompanied with additional efforts for maintenance the chains, e.g. providing lubrication means such as oil, to ensure that the chain is working smoothly during a production task. This makes the use of such a zipper system susceptible to regular maintenance and thus, complex and expensive when used in a production process.

There is a need to address these issues.

### SUMMARY OF THE INVENTION

Therefore, it would be advantageous to provide an improved concept for a belt actuator system that can be manufactured in an easy and cost-efficient manner and that is further easy to adaptable for different applications and which can be operated at low-costs .

The object of the present invention is solved by the subject matter of the independent claims, wherein further embodiments are incorporated in the dependent claims.

In a first aspect of the present invention, there is provided a belt actuator comprising:
at least a drive unit,
a belt zipper system configured to form a third belt element in a zip-fastening manner of a first belt element and a second belt element comprising:
   - a guiding arrangement configured to move the first belt element and the second belt element in a synchronous manner;
   - a first zip-fastening arrangement, wherein the first zip-fastening arrangement is configured to connect a first part of the first belt element with a second part of the second belt element in a zip-like manner to obtain the third zip-fastened belt element, and wherein the drive unit is connected to the first zip-fastening arrangement configured to drive the first zip-fastening arrangement.

One important aspect of the belt actuator system comprising the belt zipper system is that the same coils are used for zipper and storing the third belt element ("zipper") and further that only a single motor is needed for actuation as well as for storing the third belt element. This makes the belt zipper system simple, as only one single motor is needed to zip or put together the belt elements. Each of the belt elements having grooves to align the two interconnecting belt elements in a zip-fastening arrangement. The same single motor is also used to unzip the third belt element which rests the belt in a spiral manner occupying only a minimum of space with a constant velocity.

The drive unit is configured to drive the coils of the first zip-fastening arrangement and / or the second zip-fastening arrangement.

A further advantageous aspect of the present invention is that the belt of the belt zipper system is driven by an actuator motor in an active way.

No springs are needed for the belt actuator system. This makes the belt zipper system very simple to built provide an effective design and a belt zipper system that is easy to maintain, as the belt elements of the belt zipper system do not need any lubrication system to be maintained compared with metal chain elements as usually known in prior art for zipper systems. The gearing of the belt zipper system is selected accordingly, so that a full zipper is achieved when the actuator is in a retracted position.

When the two belt elements are rolled into each other in a zipped-like manner to form the third resulting belt element, the final or composed belt element becomes very stiff and can be used for example in an actuator system as connecting means or force transmitting means to drive or to move for example a tool that is connected to the belt zipper system.

As the belt elements used by the belt zipper system are made of one single material, the manufacturing of the belt elements and the belt zipper system in total is easy and cost-efficient.

A further advantage of the belt zipper system can be easily adapted to different fields of applications.

According to an example, the defined first distance of the first plane of the guiding arrangement related to the second plane of the first zip-fastening arrangement in a defined horizontal and / or vertical direction. In this way, the belt zipper system can be producted in a very simple design that makes the belt zipper system cost-efficient.

According to an example, the guiding arrangement comprises an actuating unit to move the first guiding element and / or the second guiding element of the guiding arrangement. In this way, an efficiently driveable belt zipper system is provided.

According to an example, the first guiding element and at least a second guiding element of the guiding arrangement have a defined distance in horizontal direction of the first plane. In this way, the belt zipper system can be easily adapted to different applications.

According to an example, the belt elements comprise a belt surface having a plurality of tooth-like form elements. In this way, a zip-fastening arrangement for the belt zipper system can be easily provided that interconnects the belt elements in smooth and easy manner.

According to an example, the coils of the two zip-fastening arrangements comprise each a coil surface having a plurality of tooth-like form elements that is identical to the belt surface of the belt elements. In this way, a zip-fastening arrangement for the belt zipper system can be easily provided that interconnects the belt elements in smooth, fixed and synchronized manner.

According to an example, the actuating unit is a motor enabling to move the both belt elements in synchronous manner. In this way, an efficiently driveable belt zipper system is provided.

According to an example, the belt elements are of a same material. In this way, the belt zipper system is simple and cost-efficient to build and does not require large maintenance.

In a second aspect of the invention, a belt system is provided comprising a belt zipper system according to the first aspect.

In a further aspect of the present invention, there is provided a belt actuator comprising:
at least a drive unit,
a belt zipper system, configured to form a third belt element in a zip-fastening manner of a first belt element and a second belt element, comprising:
   - a guiding arrangement comprising a first movable guiding element and at least a second movable guiding element arranged in a same first plane configured to move the first belt element and the second belt element in a synchronous manner;
   - a first zip-fastening arrangement comprising a first movable coil and a second movable coil arranged in a same second plane, wherein the first zip-fastening arrangement is configured to connect a first part of the first belt element with a second part of the second belt element in a zip-like manner to obtain the third zip-fastened belt element, and
   - wherein the first plane of the guiding arrangement is positioned in a defined first distance to the second plane of the first zip-fastening arrangement,
   - a second zip-fastening arrangement comprising a third movable coil and a fourth movable coil arranged in a same third plane wherein the third plane is arranged in a second horizontal distance to the second plane of the first zip-fastening arrangement;
   - wherein the drive unit is connected to the first zip-fastening arrangement and / or is connected to the second zip-fastening arrangement.

### BRIEF DESCRIPTION OF THE DRAWINGS

Exemplary embodiments will be described in the following with reference to the following drawings:
Fig. 1 illustrates a schematic example of a belt actuator system with a belt zipper system according to an embodiment of the present invention;
Fig. 2 illustrates a schematic example of a belt actuator system with a belt zipper system according to an embodiment of the present invention;
Fig. 3 illustrates a sectional view of a coil of a belt actuator system with a belt zipper system according to an embodiment of the present invention;
Fig. 4 illustrates a coil of the belt zipper system in a perspective view according to an embodiment of the present invention;
Fig. 5 illustrates a schematic example of a belt actuator system with a belt zipper system according to an embodiment of the present invention;
Fig. 5-1 illustrates a schematic example of a belt actuator system with a belt zipper system according to an embodiment of the present invention;
Fig. 5-2 illustrates a schematic example of a belt actuator system with a belt zipper system according to an embodiment of the present invention;
Fig. 5-3 illustrates a schematic example of a belt actuator system with a belt zipper system according to an embodiment of the present invention;
Fig. 5-4 illustrates a schematic example of a belt actuator system with a belt zipper system according to an embodiment of the present invention; and
Fig. 6 illustrates a schematic example of a winded belt according to an embodiment of the present invention.

### DETAILED DESCRIPTION OF THE DRAWINGS

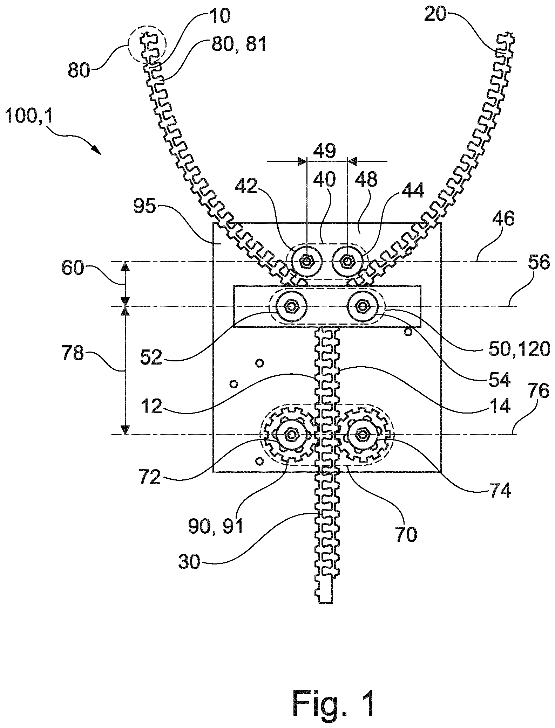

Fig. 1 illustrates a schematic example of a belt actuator system 100 with a belt zipper system 1 according to an embodiment of the present invention.

The belt zipper system 1 is configured to form a third belt element 30 in a zip-fastening manner of a first belt element 10 and a second belt element 20.

The belt zipper system 1 comprises a guiding arrangement 40, 42, 44 comprising a first movable guiding element 42 and at least a second movable guiding element 44 arranged in a same first plane 46 configured to move the first belt element 10 and the second belt element 20 in a synchronous manner.

According to Fig. 1, the guiding arrangement 40, 42, 44 in Fig. 1 comprises an actuating unit 48 to move the first guiding element 42 and / or the second guiding element 44 of the guiding arrangement 40.

The belt zipper system 1 further comprises a first zip-fastening arrangement 50 omprising a first movable coil 52 and a second movable coil 54 arranged in a same second plane 56, wherein the first zip-fastening arrangement 50 is configured to connect a first part 12 of the first belt element 10 with a second part 14 of the second belt element 20 in a zip-like manner to obtain the third zip-fastened belt element 30.

In this respect, it should be noted that alternatively, the belt actuator system 100 may comprise a drive unit 120 to drive the first zip-fastening arrangement 50 and its corresponding coils 52, 54 instead of the actuating unit 48.

Further, in an example, the drive unit 120 is connected to the first zip-fastening arrangement 50 configured to drive the first zip-fastening arrangement 50 and / or is connected to the second zip-fastening arrangement 70 configured to drive the second zip-fastening arrangement 70.

The drive unit 120 may comprise a single motor or a plurality of motors (not shown in Fig. 1).

In the belt zipper system 1, the first plane 46 of the guiding arrangement 40, 42, 44 is positioned in a defined first distance 60 to the second plane 56 of the first zip-fastening arrangement 50, 52, 54.

Optionally, the defined first distance 60 of the first plane 46 of the guiding arrangement 40, 42, 44 related to the second plane 56 of the first zip-fastening arrangement 50 in a defined horizontal and / or vertical direction.

According to Fig. 1, the belt zipper system 1 comprises a second zip-fastening arrangement 70 comprising a third movable coil 72 and a fourth movable coil 74 arranged in a same third plane 76, wherein the third plane 76 is arranged in a second horizontal distance 78 to the second plane 56 of the first zip-fastening arrangement 50.

As the Fig. 1 shows, the first guiding element 42 and at least a second guiding element 44 of the guiding arrangement 40 have a defined distance 49 in horizontal direction of the first plane 46.

According to Fig. 1, the the belt elements 10, 20 comprise a belt surface 80 having a plurality of tooth-like form elements 81.

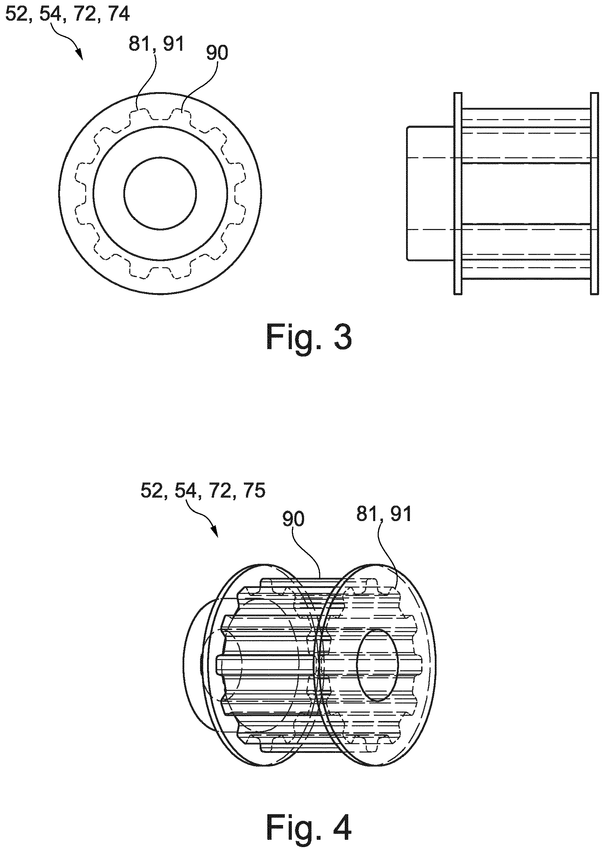

According to Fig. 1 in combination with Fig. 3 and 4, the coils 52, 72, 74 of the two zip-fastening arrangements 50, 70 comprise each a coil surface 90 having a plurality of tooth-like form elements 91 that is identical to the belt surface 80 of the belt elements 10, 20.

According to a further and more detailed example of the belt actuator system 100 and as shown in Fig. 1, the belt actuator system 100 comprises at least a drive unit 120 and a belt zipper system 1 configured to form a third belt element 30 in a zip-fastening manner of a first belt element 10 and a second belt element 20.

The belt zipper system 1 further comprises:
- a guiding arrangement 40, 42, 44 comprising a first movable guiding element 42 and at least a second movable guiding element 44 arranged in a same first plane 46 configured to move the first belt element 10 and the second belt element 20 in a synchronous manner;
- a first zip-fastening arrangement 50 comprising a first movable coil 52 and a second movable coil 54 arranged in a same second plane 56, wherein the first zip-fastening arrangement 50 is configured to connect a first part 12 of the first belt element 10 with a second part 14 of the second belt element 20 in a zip-like manner to obtain the third zip-fastened belt element 30, and

- wherein the first plane 46 of the guiding arrangement 40, 42, 44 is positioned in a defined first distance 60 to the second plane 56 of the first zip-fastening arrangement 50,
- a second zip-fastening arrangement 70 comprising a third movable coil 72 and a fourth movable coil 74 arranged in a same third plane 76, wherein the third plane 76 is arranged in a second horizontal distance 78 to the second plane 56 of the first zip-fastening arrangement 50,
- wherein the drive unit 120 is connected to the first zip-fastening arrangement 50 configured to drive the first zip-fastening arrangement 50 and / or is connected to the second zip-fastening arrangement 70 configured to drive the second zip-fastening arrangement 70.

According to Fig. 1, the actuating unit 48 is a motor enabling to move the both belt elements 10, 20 preferably in synchronous or synchronized manner.

The belt elements 10, 20 may preferably of a same material and preferably of a flexible plastic material.

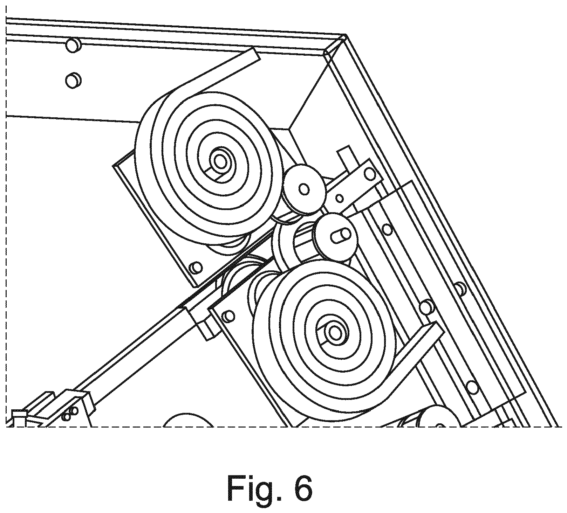

In this context, it should be noted that the lose ends of the belt may be winded up by using a preferred system, e.g. actively-driven or passive system (not shown in the figures). The winding of the belt ends may be done in a same plane or in a different plane. In this respect, Fig. 6 shows an example for belts that are winded up.

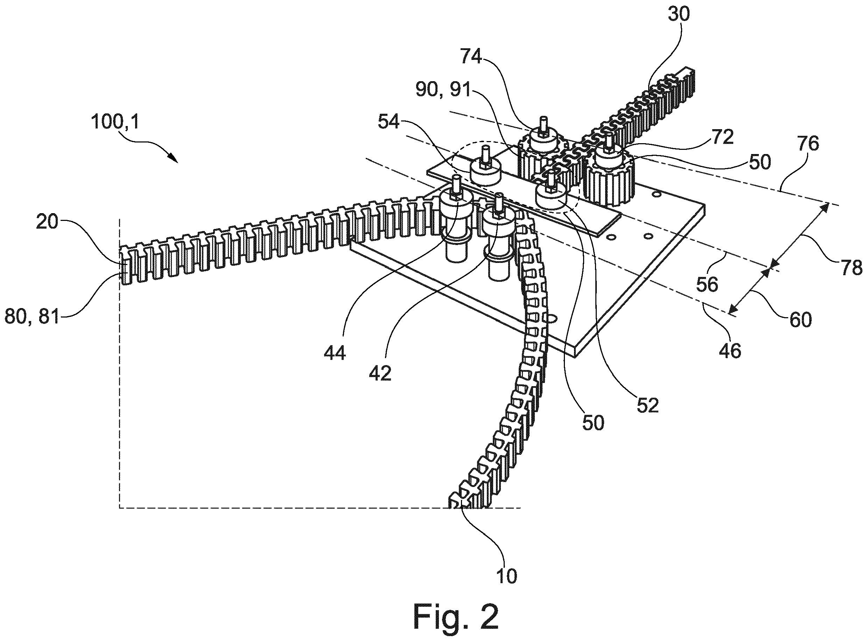

Fig. 2 illustrates a schematic example of a belt actuator system 100 with a belt zipper system 1 according to an embodiment of the present invention. In principle, the embodiment of Fig. 2 shows the same belt zipper system 1 of Fig. 1 only in another perspective view without the drive unit 120 and the actuating unit 48.

Fig. 3 illustrates a sectional view of a coil 52, 54, 72, 74 of a belt zipper system 1 according to an embodiment of the present invention. The coil 52, 54, 72, 74 has a coil surface 90 which is configured to have cavities in which the tooth-like form element 81, 91 of the belt element 10, 20 is positioned accordingly.

Fig. 4 illustrates a coil 52, 54, 72, 74 of the belt zipper system 1 having a coil surface 90 in a perspective view according to an embodiment of the present invention.

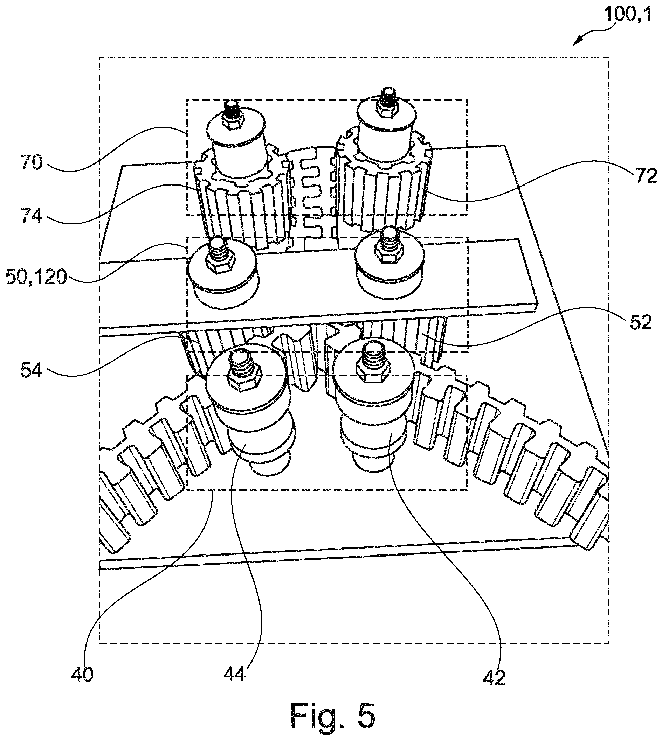

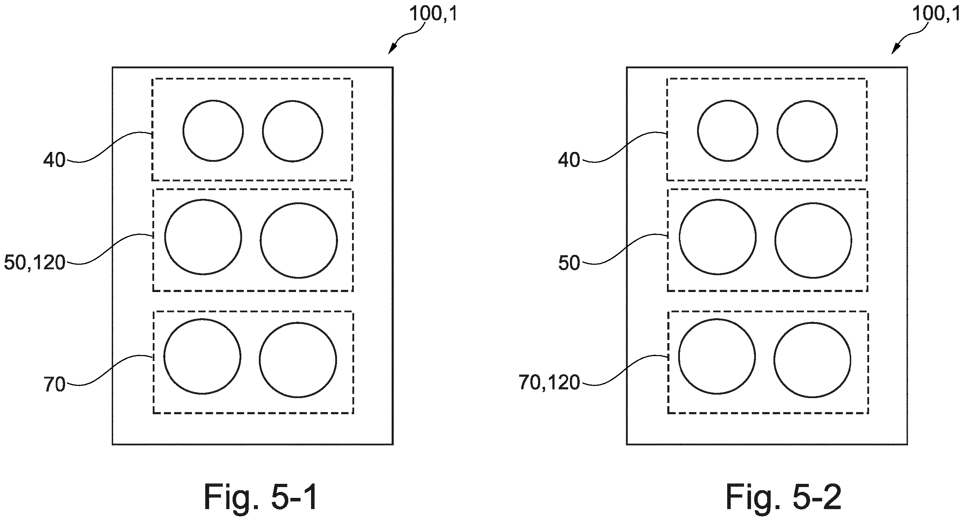

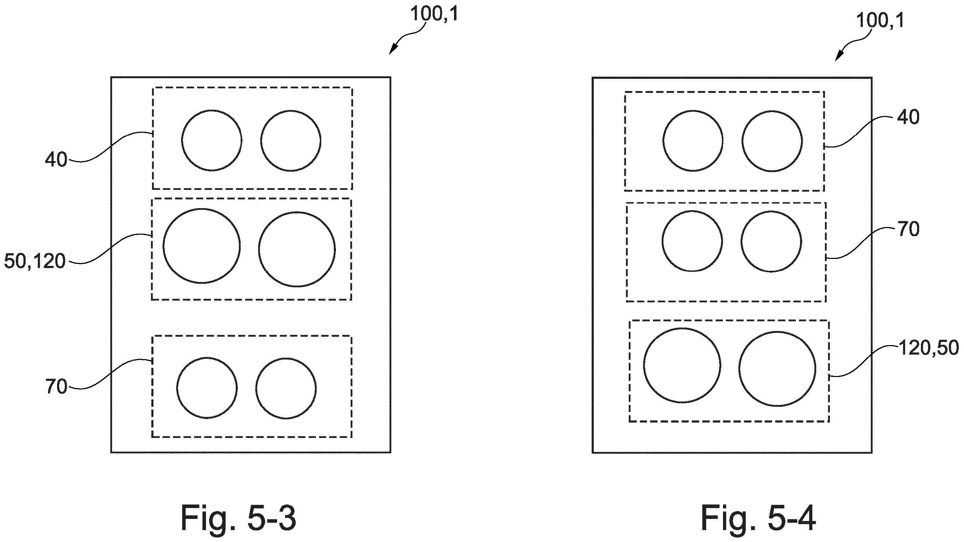

Fig. 5 illustrates a schematic example of a belt actuator system 100 with a belt zipper system 1 according to an embodiment of the present invention. In principle, the belt actuator system 100 is identical to the embodiment shown in Fig. 1. However, in the embodiment of Fig. 5, no actuating unit 48 is inserted. Instead, as a further example, a drive unit 120 is implemented driving the first zip-fastening-arrangement 50. The drive unit 120 may comprise a single motor or a plurality of motors (not shown in Fig. 5) to either drive one coil or to drive both coils of the two coils 52, 54. Hence, the coils 52, 54 may embodied as tractional gears which are connected to a motor for example.

The motor used for tractional gears may be a stepper motor providing the functionality of backdrivability of the system or / and may be a DC motor not providing the functionality of backdrivability of the system.

For the following figures 5-1 to 5-4, it is noted that for ease of understanding, the corresponding coils 42, 44 of the guiding arrangement 40, the coils 52, 54 of the first zip-fastening arrangement 50 and the coils 72, 74 of the second zip-fastening arrangement 70 as shown in Fig. 1, 2 and 5 are not depicted in the figures 5-1 to 5-4.

Fig. 5-1 illustrates a schematic example of a belt actuator system 100 with a belt zipper system 1 according to an embodiment of the present invention. In this embodiment, the drive unit 120 is configured to actively drive coils 52, 54 of the first zip-fastening arrangement 50. The drive unit 120 may be configured as a or more tractional gear elements connected to one or more motors (not shown). The coils 42, 44 of the guiding arrangement 40 are configured as passive rollers or fix guides. The coils 72, 74 of the second zip-fastening arrangement 70 are configured as passive tractional gear elements not connected to a motor.

Fig. 5-2 illustrates a further schematic example of a belt actuator system 100 with a belt zipper system 1 according to an embodiment of the present invention. In this embodiment, the drive unit 120 is configured to actively drive coils 72, 74 of the second zip-fastening arrangement 70 and is embodied as a tractional gear element connected to a motor unit (not shown). The coils 42, 44 of the guiding arrangement 40 are configured as passive rollers or fix guides and the coils 52, 54 of the first zip-fastening arrangement 50 are configured as passive tractional gear elements not connected to a motor.

Fig. 5-3 illustrates a schematic example of a belt actuator system 100 with a belt zipper system 1 according to an embodiment of the present invention. In this embodiment, the drive unit 120 is configured to actively drive coils 52, 54 of the first zip-fastening arrangement 50. The drive unit 120 may be configured as tractional gear elements connected to one or more motors (not shown). The coils 42, 44 of the guiding arrangement 40 and the coils 72, 74 of the second zip-fastening arrangement 70 are configured as passive rollers or fix guides.

Fig. 5-4 illustrates a further schematic example of a belt actuator system 100 with a belt zipper system 1 according to an embodiment of the present invention. In this embodiment, the drive unit 120 is configured to actively drive coils 52, 54 of the first zip-fastening arrangement 50. The drive unit 120 may be configured as tractional gear elements connected to one or more motors (not shown) to drive the coils 52, 54 of the first zip-fastening arrangement 50. The coils 42, 44 of the guiding arrangement 40 and the coils 72, 74 of the second zip-fastening arrangement 70 are configured as passive rollers or fix guides.

In regard of the embodiments of Fig 5-1, 5-2, 5-3 and 5-4, it should be further noted that the diameter of the passive rollers or fix guides can be of any size that is suitable for the choosed application.

List of reference signs
- 1: Belt zipper system
- 10: First belt element
- 12: First part
- 14: Second part
- 20: Second belt element
- 22: First guiding element
- 24: Second guiding element
- 30: Third belt element
- 40: Guiding arrangement
- 42: First guiding element
- 44: Second guiding element
- 46: First plane
- 48: Actuating unit
- 49: Distance between guiding elements
- 50: First zip-fastening arrangement
- 52: First coil 52
- 54: Second coil
- 56: Second plane
- 60: First distance
- 70: Second zip-fastening arrangement
- 72: Third coil
- 74: Fourth coil
- 76: Third plane
- 78: Second distance
- 80: Belt surface
- 81, 91: Tooth-like form element of the belt element
- 90: Coil surface
- 95: Platform
- 120: Drive unit

## Claims

1. A belt actuator system (100) comprising:
at least a drive unit (120),
a belt zipper system (1) configured to form a third belt element (30) in a zip-fastening manner of a first belt element (10) and a second belt element (20) comprising:
- a guiding arrangement (40, 42, 44) configured to move the first belt element (10) and the second belt element (20) in a synchronous manner;
- a first zip-fastening arrangement (50), wherein the first zip-fastening arrangement (50) is configured to connect a first part (12) of the first belt element (10) with a second part (14) of the second belt element (20) in a zip-like manner to obtain the third zip-fastened belt element (30), and
- wherein the drive unit (120) is connected to the first zip-fastening arrangement (50) configured to drive the first zip-fastening arrangement (50).

2. The belt actuator system (100) according to claim 1, wherein the defined first distance (60) of the first plane (46) of the guiding arrangement (40, 42, 44) related to the second plane (56) of the first zip-fastening arrangement (50) in a defined horizontal and / or vertical direction.

3. The belt actuator system (100) according to any of the previous claims, wherein the guiding arrangement (40, 42, 44) comprises an actuating unit (48) to move the first guiding element (42) and / or the second guiding element (44) of the guiding arrangement (40).

4. The belt actuator system (100) according to any of the previous claims, wherein the first guiding element (42) and at least a second guiding element (44) of the guiding arrangement (40) have a defined distance (49) in horizontal direction of the first plane (46).

5. The belt actuator system (100) according to any of the previous claims, wherein the belt elements (10, 20) comprise a belt surface (80) having a plurality of tooth-like form elements (81).

6. The belt actuator system (100) according to any of the previous claims, wherein the coils (50, 52) of the first zip-fastening arrangement (50) comprises each a coil surface (90) having a plurality of tooth-like form elements (91) that is identical to the belt surface (80) of the belt elements (10, 20).

7. The belt actuator system (100) according to any of the previous claims, wherein the actuating unit (48) is a motor enabling to move the both belt elements (10, 20) in synchronous manner.

8. The belt actuator system (100) according to any of the previous claims, wherein the belt elements (10, 20) are of a same material.

9. A belt system, comprising a belt actuator system (100) according to any of the previous claims.
